# EUROPEAN PATENT APPLICATION

(11) **EP 4 641 427 A1**
(43) Date of publication of application: **29.10.2025**
(21) Application number: 24171685.1
(22) Date of filing: 22.04.2024
(51) Int. Cl.: G06F 30/15, G06F 30/20, B64F 5/10, G06F 119/18, G06F 111/04

(54) **METHOD FOR CREATING A DESIGN DATASET, AS WELL AS CORRESPONDING COMPUTER PROGRAM, COMPUTER-READABLE DATA CARRIER, COMPUTING DEVICE, AND COMPUTER SYSTEM**

(71) Applicant: Airbus S.A.S., 31700 Blagnac (FR)
(72) Inventor: GEYER, Fabien, 82024 Taufkirchen (DE); SCHUPKE, Dominic, 82024 Taufkirchen (DE); MEYERHOFF, Thomas, 82024 Taufkirchen (DE)
(74) Representative: OTN Airbus SAS

(57) **Abstract**

A method, computer program (3), computer-readable data-carrier (4, 4a, 4b), computing device (2) and computer system (1) for creating a design dataset (D) containing at least one technical parameter (P) of an apparatus (A) are provided, the method comprising the steps of providing the design dataset (D) at a computer workstation (5) operated by a user (U); obtaining at least one parameter specification (R) for the at least one technical parameter (P) from a specification dataset (Q) pertaining to the apparatus (A); comparing the at least one technical parameter (P) to the at least one parameter specification (R); and triggering a notification event (N) at the computer workstation (5) for notifying the user (U) if the comparison indicates that the at least one technical parameter (P) is affected by the at least one parameter specification (R).

## Description

### Technical Field

The present disclosure relates computer systems providing artificial intelligence (Al) and Machine Learning (ML) training and/or interference for aiding technical design procedures. In particular, the present invention relates to a method for creating a design dataset containing at least one technical parameter of an apparatus, a computer program, a computer-readable data-carrier, a computing device, in particular a computer workstation, and a computer system comprising a computing device.

### Technical Background

Computer systems for designing apparatuses are known from the prior art. Such computer systems commonly comprise computing devices, e.g., in the form of computer workstations, and alike. One technical field of such computer systems is product development in the aeronautical industry, where adherence to standards and processes is mandatory for certification purposes.

US 2008/0097728 A1, for example, relates to a detection of the overstepping of design loads of an aircraft tailplane may include determining current bending and twisting moments applied to the aircraft. The determined bending and twisting moments are compared with a safety envelope to determine the risk of developing permanent deformations on the tailplane. A determination is made as to whether a structural inspection of the tailplane should be performed based on the comparison result.

During product development, engineers have to be aware of and follow sets of standards, regulations, and processes including requirements from the regulatory and certification bodies as well as the internal processes of the respective manufacturer of an apparatus, for example a vehicle, such as an aircraft. Some examples of such standards for aircraft manufacturers are given in the following:
- DO-178C, Software Considerations in Airborne Systems and Equipment Certification;
- DO-248C, Supporting Information for DO-178C and DO-278A;
- DO-254, Design Assurance Guidance for Airborne Electronic Hardware;
- ARP4761, Guidelines and Methods for Conducting the Safety Assessment Process on Civil Airborne Systems and Equipment.

Additional standards are also sometimes required for interoperability purposes, such as for example:
- IETF RFC 793 - Transmission Control Protocol (TCP);
- ARINC Specification 664, Avionics Full-Duplex Switched Ethernet (AFDX);
- ARINC Specification 429, Mark 33 Digital Information Transfer System (DITS);
- 3GPP Specification #. 36.913, Requirements for further advancements for Evolved Universal Terrestrial Radio Access (E-UTRA) (LTE-Advanced).

Some examples for regulations applying to aircrafts are given in the following:
- International Telecommunication Union (ITU) Radio Regulations (RR);
- European Commission (EC) Radio Equipment Directive (RED);
- Frequency allocations in certain countries, e.g., as defined by the Bundesnetzagentur in Germany.

Such standards and regulations typically cross-link and reference related standards and regulations, respectively, making it a complicated process to understand their content and to assess which standard and/or regulation applies to which part of the product being designed and where. Designing a compliant product thus often requires years of experience in order to get a complete understanding about the relevant standards and regulation as well as their implication on a given design. This is also due to the large body of standards and regulations, and their volume in terms of page numbers (sometimes more than 1000 pages per standard).

In order to handle the variety and volume of standards and regulations appliable, a common approach according to the prior art is to manually build databases of respective documents with basic search functions enabling to search and look-up and respective documentation, for example, text searches carried out by the user. Another relatively novel approach for dealing with relatively large information contents spread across multiple sources is the application of artificial intelligence (Al) and/or machine learning (ML) algorithms. AI/ML algorithms as known from the prior art can be executed on different processing devices in various computation environments.

OpenAl, Josh Achiam, Steven Adler, Sandhini Agarwal, Lama Ahmad, Ilge Akkaya, Florencia Leoni Aleman, Diogo Almeida, Janko Altenschmidt, Sam Altman, Shyamal Anadkat, Red Avila, Igor Babuschkin, Suchir Balaji, Valerie Balcom, Paul Baltescu, Haiming Bao, Mohammad Bavarian, Jeff Belgum, Irwan Bello, Jake Berdine, Gabriel Bernadett-Shapiro, Christopher Berner, Lenny Bogdonoff, Oleg Boiko, Madelaine Boyd, Anna-Luisa Brakman, Greg Brockman, Tim Brooks, Miles Brundage, Kevin Button, Trevor Cai, Rosie Campbell, Andrew Cann, Brittany Carey, Chelsea Carlson, Rory Carmichael, Brooke Chan, Che Chang, Fotis Chantzis, Derek Chen, Sully Chen, Ruby Chen, Jason Chen, Mark Chen, Ben Chess, Chester Cho, Casey Chu, Hyung Won Chung, Dave Cummings, Jeremiah Currier, Yunxing Dai, Cory Decareaux, Thomas Degry, Noah Deutsch, Damien Deville, Arka Dhar, David Dohan, Steve Dowling, Sheila Dunning, Adrien Ecoffet, Atty Eleti, Tyna Eloundou, David Farhi, Liam Fedus, Niko Felix, Simón Posada Fishman, Juston Forte, Isabella Fulford, Leo Gao, Elie Georges, Christian Gibson, Vik Goel, Tarun Gogineni, Gabriel Goh, Rapha Gontijo-Lopes, Jonathan Gordon, Morgan Grafstein, Scott Gray, Ryan Greene, Joshua Gross, Shixiang Shane Gu, Yufei Guo, Chris Hallacy, Jesse Han, Jeff Harris, Yuchen He, Mike Heaton, Johannes Heidecke, Chris Hesse, Alan Hickey, Wade Hickey, Peter Hoeschele, Brandon Houghton, Kenny Hsu, Shengli Hu, Xin Hu, Joost Huizinga, Shantanu Jain, Shawn Jain et al., "GPT-4 Technical Report", arXiv:2303.08774 (https://doi.org/10.48550/arXiv.2303.08774) report the development of GPT-4, a large-scale, multimodal model which can accept image and text inputs and produce text outputs. While less capable than humans in many real-world scenarios, GPT-4 exhibits human-level performance on various professional and academic benchmarks, including passing a simulated bar exam with a score around the top 10% of test takers. GPT-4 is a Transformer-based model pre-trained to predict the next token in a document. The post-training alignment process results in improved performance on measures of factuality and adherence to desired behaviour. A core component of this project was developing infrastructure and optimization methods that behave predictably across a wide range of scales. This allowed to accurately predict some aspects of GPT-4's performance based on models trained with no more than 1/1 ,000th the compute of GPT-4.

Long Ouyang, Jeff Wu, Xu Jiang, Diogo Almeida, Carroll L. Wainwright, Pamela Mishkin, Chong Zhang, Sandhini Agarwal, Katarina Slama, Alex Ray, John Schulman, Jacob Hilton, Fraser Kelton, Luke Miller, Maddie Simens, Amanda Askell, Peter Welinder, Paul Christiano, Jan Leike, Ryan Lowe, "Training language models to follow instructions with human feedback", arXiv:2203.02155 (https://doi.org/10.48550/arXiv.2203.02155), state that making language models bigger does not inherently make them better at following a user's intent. For example, large language models can generate outputs that are untruthful, toxic, or simply not helpful to the user. In other words, these models are not aligned with their users. In this paper, an avenue for aligning language models with user intent on a wide range of tasks by fine-tuning with human feedback is shown. Starting with a set of labeler-written prompts and prompts submitted through the OpenAl API, a dataset of labeler demonstrations of the desired model behavior is collected, which is used to fine-tune GPT-3 using supervised learning. Then a dataset of rankings of model outputs is collected, which is used to further fine-tune this supervised model using reinforcement learning from human feedback. The resulting models are called InstructGPT. In human evaluations on the applied prompt distribution, outputs from the 1.3B parameter InstructGPT model are preferred to outputs from the 175B GPT-3, despite having 100x fewer parameters. Moreover, InstructGPT models show improvements in truthfulness and reductions in toxic output generation while having minimal performance regressions on public NLP datasets. Even though InstructGPT still makes simple mistakes, the presented results show that fine-tuning with human feedback is a promising direction for aligning language models with human intent.

Edward J. Hu, Yelong Shen, Phillip Wallis, Zeyuan Allen-Zhu, Yuanzhi Li, Shean Wang, Lu Wang, Weizhu Chen, "LoRA: Low-Rank Adaptation of Large Language Models", arXiv:2106.09685 (https://doi.org/10.48550/arXiv.2106.09685), state that an important paradigm of natural language processing consists of large-scale pre-training on general domain data and adaptation to particular tasks or domains. As larger models are pre-trained, full fine-tuning, which retrains all model parameters, becomes less feasible. Using GPT-3 175B as an example - deploying independent instances of fine-tuned models, each with 175B parameters, is prohibitively expensive. A Low-Rank Adaptation, or LoRA, is proposed, which freezes the pre-trained model weights and injects trainable rank decomposition matrices into each layer of the Transformer architecture, greatly reducing the number of trainable parameters for downstream tasks. Compared to GPT-3 175B fine-tuned with Adam, LoRA can reduce the number of trainable parameters by 10,000 times and the GPU memory requirement by 3 times. LoRA performs on-par or better than fine-tuning in model quality on RoBERTa, DeBERTa, GPT-2, and GPT-3, despite having fewer trainable parameters, a higher training throughput, and, unlike adapters, no additional inference latency. An empirical investigation into rank-deficiency in language model adaptation is also provided, which sheds light on the efficacy of LoRA. A package that facilitates the integration of LoRA with PyTorch models and provide our implementations and model checkpoints for RoBERTa, DeBERTa, and GPT-2, is released.

Tom B. Brown, Benjamin Mann, Nick Ryder, Melanie Subbiah, Jared Kaplan, Prafulla Dhariwal, Arvind Neelakantan, Pranav Shyam, Girish Sastry, Amanda Askell, Sandhini Agarwal, Ariel Herbert-Voss, Gretchen Krueger, Tom Henighan, Rewon Child, Aditya Ramesh, Daniel M. Ziegler, Jeffrey Wu, Clemens Winter, Christopher Hesse, Mark Chen, Eric Sigler, Mateusz Litwin, Scott Gray, Benjamin Chess, Jack Clark, Christopher Berner, Sam McCandlish, Alec Radford, Ilya Sutskever, Dario Amodei, "Language Models are Few-Shot Learners", arXiv:2005.14165 (https://doi.org/10.48550/arXiv.2005.14165), lay out that recent work has demonstrated substantial gains on many natural language processing (NLP) tasks and benchmarks by pre-training on a large corpus of text followed by fine-tuning on a specific task. While typically task-agnostic in architecture, this method still requires task-specific fine-tuning datasets of thousands or tens of thousands of examples. By contrast, humans can generally perform a new language task from only a few examples or from simple instructions - something which current NLP systems still largely struggle to do. It is shown that scaling up language models greatly improves task-agnostic, few-shot performance, sometimes even reaching competitiveness with prior state-of-the-art fine-tuning approaches. Specifically, GPT-3, an autoregressive language model with 175 billion parameters, 10x more than any previous non-sparse language model, is trained and tested for its performance in the few-shot setting. For all tasks, GPT-3 is applied without any gradient updates or fine-tuning, with tasks and few-shot demonstrations specified purely via text interaction with the model. GPT-3 achieves strong performance on many NLP datasets, including translation, question-answering, and cloze tasks, as well as several tasks that require on-the-fly reasoning or domain adaptation, such as unscrambling words, using a novel word in a sentence, or performing 3-digit arithmetic. At the same time, some datasets could be identified, where GPT-3's few-shot learning still struggles, as well as some datasets where GPT-3 faces methodological issues related to training on large web corpora.

In view of the above, the known prior art cannot provide a fully satisfying way in how the variety and volume of standards and regulations appliable when designing technical apparatuses can be handled in an efficient and comprehensive, yet diligent and reliable way. The common approach according to the prior to manually build databases of respective documents with basic search functions enabling to search and look-up in respective documentation, for example, text searches carried out by the user, remains cumbersome, time-consuming, and error prone. Any approaches involving AI/ML algorithms involving NLP for handling large information contents spread across multiple sources neither guarantee efficiency, nor reliability, in particular, if it comes to complex technical matters.

### Summary

It may thus be seen as an object to provide means for designing apparatuses subject to technical standards and/or regulations in an efficient, yet reliable way. Furthermore, it may be seen as an object to enhance or provide a way to enable computer systems to use AI/ML for aiding the design of apparatuses. These objects are solved by the subject matter of the independent claims.

According to an aspect, a method for creating a design dataset containing at least one technical parameter of an apparatus is provided, the method comprising the steps of providing the design dataset at a computer workstation operated by a user; obtaining at least one parameter specification for the at least one technical parameter from a specification dataset pertaining to the apparatus; comparing the at least one technical parameter to the at least one parameter specification; and triggering a notification event at the computer workstation for notifying the user if the comparison indicates that the at least one technical parameter is affected by the at least one parameter specification.

According to an aspect, a computer program is provided, comprising instructions which, when the program is executed by a computing device, cause the computing device to carry out a corresponding.

According to an aspect, a computer-readable data-carrier is provided, having stored thereon the computer program.

According to an aspect, a computing device is provided, configured to carry out a corresponding computer program and/or comprising a corresponding computer-readable data-carrier.

According to an aspect, a computer system is provided, comprising a corresponding computing device and/or a server device configured to carry out a corresponding computer program and/or comprising a corresponding computer-readable data-carrier.

The at least one technical parameter can be affected by the at least one parameter specification in that it is being determined that the parameter specification is relevant for the at least one technical parameter. The determination can be determined for a specific point of time. The notification event can be automatically triggered during the design process and/or upon a respective request by the user.

This solution is suitable in any kind of computing environment involving Artificial Intelligence (Al) and/or Machine Learning (ML) trained for interfering in automatically triggering the notification event. The solution has the advantage over the prior art of enabling AI/ML, for example, as used for text processing, such as NLP, to assist engineers to understand and follow standards during product development. With the help of large language models (LLM) and their ability to understand documents, an AI/ML-based assistant can be provided which is able to assist product design and verification.

Compared to the prior art, the solution allows to save working time and costs as less time and effort is required to edit, write and/or validate product designs as well as respective product specifications. Moreover, the solution helps to reduce errors in technical designs if missed (parts of) documents in the human process are excluded. Thereby, trade-offs between heuristic accuracy of manually maintained databases, and the computational efficiency and capacity of AI/ML models can be avoided, especially in that on the one hand, AI/ML models can help assuring a comprehensive consideration of the databases, and on the other hand, can be specifically guided for reliably assisting the user, for example, in that the user supervises the models when automatically mapping technical parameters to respective parameter specifications.

The solution particularly provides computing devices running design applications which are suitable for designing all kinds of apparatuses, including fault intolerant and/or safety-critical systems. A corresponding apparatus may be provided in particular in form of a vehicle, such as a land vehicle, watercraft, aircraft and/or spacecraft, a medical device, such as a diagnostic tool or technical appliance, and/or any kind of utility provider infrastructure, such as power plants, energy network installations, as well as information infrastructure installations. A computer system for solving the underlying problem may thus comprise a corresponding computing device. The computer system thereby helps to apply AI/ML algorithms in computer aided design of apparatuses. Corresponding computing devices, such as computer workstations and/or servers, may be part of a computer system for providing computer assisted design procedures. A corresponding computer-readable data carrier may include and/or be comprised of a computer-readable medium and/or a data carrier signal.

Further developments can be derived from the dependent claims and from the following description. Features described with reference to the computing device may be implemented as method steps, or vice versa. Therefore, the description provided in the context of the computing device applies in an analogous manner also to respective methods. In particular, the functions of the computing device and of its components may be implemented as steps of methods and the method steps may be implemented as functions of the computing device, a computer system or vice versa.

According to an embodiment of a method, the notification event is being triggered if the at least one technical parameter is outside a parameter range defined by the parameter specification. The technical parameter and/or parameter range may be continuously monitored by means of respective AI/ML models. Thereby, any deviations from specifications and/or regulations can be recognised at an early point of time, preferably essentially in real-time, thus avoiding the loss of time and effort for correcting the technical parameters at a later stage of the design procedure.

According to an embodiment of a method, the step of comparing is being carried out at a predefined point of time with respect to a previous point of time. The comparison can be carried out for a present version of the design dataset and/or a previous version of the design dataset, and/or for a present version of the specification dataset and/or a previous version of the specification dataset. Thereby, the comparison can be carried out at certain milestones of the design process. It can be assessed whether at least one technical parameter complies with different versions the design dataset and/or specification dataset. This further helps in facilitating the design process.

According to an embodiment of a method, the step of comparing is continuously being carried out. The step of comparing can be carried out by continuously monitoring and/or supervising the design dataset and/or the specification dataset. A continuous comparison can be carried out by a watchdog process, for example, at respective predefined time intervals. This further helps in avoiding design errors.

According to an embodiment of a method, the method further comprises the step of identifying a parameter pattern matching the at least one technical parameter; wherein the notification event notifies the user of the identification. A certain parameter pattern can be suggested to the user. The parameter parent may comprise a number of technical parameters and/or certain relationships between technical parameters. This further helps in facilitating the design process and enhancing efficiency, in particular in that previously known parameter patterns can be reused.

According to an embodiment of a method, the method further comprises the step of identifying a specification group containing a number of specification datasets. The specification group can comprise at least one set of specification documents. The specification group and/or set of specification documents may be selected as pertaining to the device.

According to an embodiment of a method, the at least one specification dataset is derived from and/or associated with a guideline, standard, and/or set of regulations pertaining to the apparatus. A certain specification dataset may be compiled from associated guidelines, standards, specifications and/or regulations pertaining to the apparatus. This further helps in efficiently managing any parameter specifications potentially affecting the at least one technical parameter.

According to an embodiment of a method, the at least one specification dataset is derived from and/or associated with at least one experience dataset comprising at least one experientially assessed parameter associated with the at least one technical parameter. Experientially assessed parameters may particularly help to determine a preferable range for the at least one technical parameter in addition to respective parameter specifications based on previous knowledge and experience. In other words, experientially assessed parameters may complement parameter specifications. This further helps in improving any apparatus design.

According to an embodiment of a method, the method further comprises the step of accessing at least one technical documentation database for obtaining the at least one specification dataset. The technical documentation database may comprise publicly available technical documents, such as patent literature, or alike. Thereby, any previous knowledge and state-of-the-art regarding the design of the apparatus can be efficiently exploited.

According to an embodiment of a method, a machine learning module identifies the at least one technical parameter and/or the at least one parameter specification. The machine learning module may be an AI/ML model trained to carry out the identification, and/or to assist in carrying out any of the steps of a method as described herein. For example, the AI/ML model may crawl through the present design dataset to identify the at least one technical parameter and/or the at least one parameter specification.

The AI/ML model may map the identified technical parameters to respective parameter specifications. The mapping may involve triggering the notification event if the at least one technical parameter has been identified and/or a respective parameter specification has been found. Such a mapping may then be supervised by the user, for example, in that the user acknowledges respective steps of the mapping procedure, such as parameter identifications and associations, allowing the user to assess, whether the parameter specifications and respective specification datasets and/or experience datasets actually apply to the apparatus and/or component thereof, to be designed. This in turn further helps in providing an accurate computer assisted supervision of the design process.

According to an embodiment of a method, the method further comprises the step of restricting a dissipation of the at least one technical parameter and/or the at least one parameter specification to the computer workstation and/or a computer system. The computer system may comprise at least one computer workstation, at least one server device and/or a group of computing devices. This helps in restricting access to the design and the related databases. Any unauthorised access and/or export of data can be avoided. Thereby, controllability and security of the design process may be further improved.

### Brief Description of the Drawings

The subject-matter will hereinafter be described in conjunction with the following drawing figures, wherein like numerals denote like elements, and wherein:
Fig. 1 is a schematic representation of an computer system for a computer assisted assessment of at least one technical parameter of an apparatus.
Fig. 2 is a schematic illustration of steps of a corresponding method.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

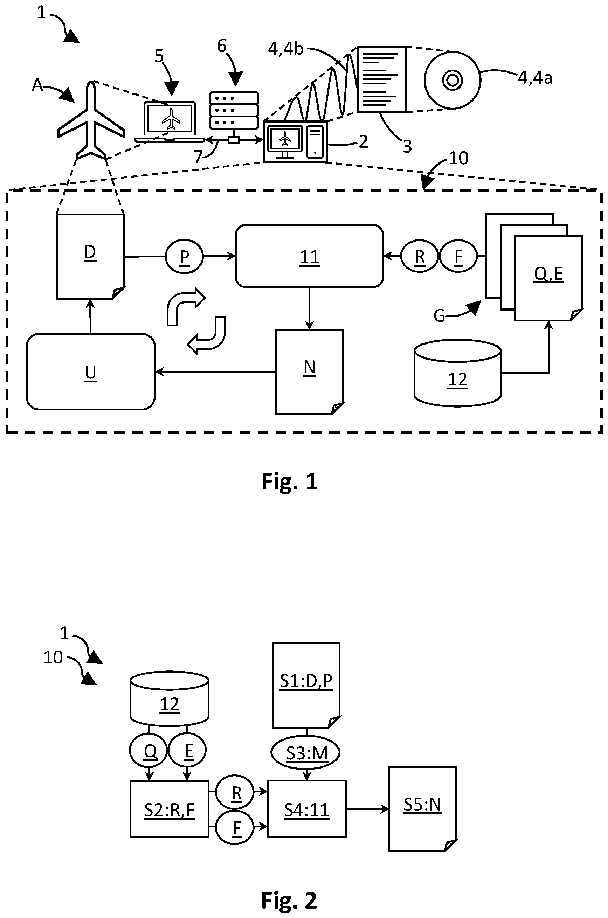

Fig. 1 shows a schematic representation of a computer system 1 for a computer assisted assessment of at least one technical parameter P of a an apparatus A, in particular a vehicle, such as an aircraft. The computer system 1 comprises a computing device 2 for implementing a corresponding method by means of a respective computer program 3 and/or computer-readable data carrier 4. The computing device 2 is configured to execute the computer program 3. The computer-readable data carrier 4 has stored thereon the computer program 3 and may take the form of a computer-readable medium 4a and/or data carrier signal 4b. Furthermore, the computer system 1 may comprise a computer workstation 5, and/or a server device 6 connected to each other via transmission lines 7 for transmitting information, such as computational data, or alike, between each other. The computing device 2 may be configured as, comprise, and/or be connected to the computer workstation 5 and/or the server device 6 via respective transmission lines 7.

The computer system 1 may provide a design application 10 comprising a machine learning module 11 and a technical documentation database 12, for example, by means of the computing device 2. The design application 10 enables to create a design dataset D containing technical parameters P of the apparatus A. For example, the design dataset D may be provided by means of the computer workstation 5 operated by a user U can operate the design application 10 by means of any input and/or output device, such as a computer keyboard, computer mouse, computer screen, or alike (not shown).

The design application 10 allows for obtaining parameter specifications R and/or experientially assessed parameters F as design rules or restrictions from a specification dataset Q and/or an experience dataset E, respectively. Any number of specification datasets Q and/or experienced datasets E may be grouped in specification groups G pertaining to the apparatus A. In operation, the design application 10 will compare the technical parameters P to the respective parameter specifications R and trigger a notification event N, for example, the computer workstation 5, notifies the user U, that the comparison indicates that at least one technical parameter P is affected by at least one parameter specification R, for example, in a circular fashion, wherein the user U edits the design dataset D, the machine learning module 11 assesses the parameters P in comparison to the parameter specifications R and/or especially assessed parameters F, and then outputs the notification N back to the user U as a feedback.

Fig. 2 is a schematic illustration of steps S of a corresponding method. For example, in a first step S1, the design dataset D containing at least one technical parameter P is provided. In a second step S2, at least one parameter specification R and/or at least one experientially assessed parameter F is obtained from the specification dataset Q and/or the experience dataset E. In the third step S3, a parameter mapping M may be carried out by the user U and/or the machine learning module 11 in order to associate the at least one technical parameter P to the at least one parameter specification R and/or the at least one experientially assessed parameter F. In the fourth step S4, the at least one technical parameter P is being compared to the at least one parameter specification R and/or the at least one experientially assessed parameter F. In the fifth step S5, the notification event N may be triggered, for example, at the computer workstation 5, if the comparison indicates that the at least one technical parameter P is affected by the at least one parameter specification R and/or the at least one experientially assessed parameter F. The specification dataset Q may comprise any technical standard and/or regulation to be processed.

The design application 10 aims at simplifying the process of understanding and becoming aware of those standards applicable to the apparatus A, i.e., for a product or technical aspect under consideration by using AI/ML models that can be implemented in the machine learning module 11, in particular in the form of LLM which have recently shown good results at understanding and summarizing documents, and are able to answer questions about documents to the user U. For example, the design dataset D may be provided in the form of a design draft, which contains the current draft written by an engineer as the user U and the technical description and design involving the technical parameters P of a product under development, such as the apparatus A as well as its components including any kind of mechanical, electric and/or electronic arrangements, including but not limited to machinery, hardware, software, transceivers, sensors and/or actuators. The technical documentation database 12 provides the specification datasets Q and/or experience dataset E, for example, containing standards and processes required by internal company processes and by the certification bodies.

The AI/ML algorithms implemented in the machine learning module 11 enable to process the design dataset D based on the design draft and the technical documentation database 12 of specification datasets Q and/or experienced datasets E containing standards, regulations, or alike, for example, based on an LLM. The user U, such as an engineer in charge of editing and/or writing design draft can consider the output of the machine learning module 11, for example, in that the notification event N are provided to the users U. Thereby, an interactive loop between the user U and the machine learning module 11 can be provided. The user U can iteratively approve design dataset D or corresponding design draft, by periodically getting feedback from the design application 10 through the machine learning module 11 regarding the current design.

At each design iteration, the machine learning module 11 can make suggestions about the design draft based on its knowledge and understanding about the technical documentation database 12 respective regulations and standards as well as internal processes. Suggestions can refer to the compliance of the design apparatus A to the associated standards, regulations, and internal processes, or more generally about the apparatus A itself. For example, standards can define optional features and provide general technical guidance which can be used to enhance the design draft.

### List of Reference Signs

- 1: computer system
- 2: computing device
- 3: assessment program
- 4: computer-readable data carrier
- 4a: computer-readable medium
- 4b: data carrier signal
- 5: computer workstation
- 6: server device
- 7: transmission line

- 10: design application
- 11: machine learning module
- 12: technical documentation database

- A: apparatus
- D: design dataset
- E: experience dataset
- F: experientially assessed parameter
- M: parameter mapping
- N: notification event
- P: technical parameter
- Q: specification dataset
- R: parameter specification
- S: step
- U: user

- S1: provide design
- S2: obtain specifications
- S3: map parameters
- S4: compare parameters
- S5: trigger notification

## Claims

1. Method for creating a design dataset (D) containing at least one technical
parameter (P) of an apparatus (A), the method comprising the steps of providing the design dataset (D) at a computer workstation (5) operated by a
user (U);
obtaining at least one parameter specification (R) for the at least one technical parameter (P) from a specification dataset (Q) pertaining to the apparatus (A);
comparing the at least one technical parameter (P) to the at least one parameter specification (R); and
triggering a notification event (N) at the computer workstation (5) for notifying the user (U) if the comparison indicates that the at least one technical parameter (P) is affected by the at least one parameter specification (R).

2. Method according to claim 1, wherein the notification event (N) is being triggered if the at least one technical parameter (P) is outside a parameter range defined by the parameter specification (R).

3. Method according to claim 1 or 2, wherein the step of comparing is being carried out at a predefined point of time with respect to a previous point of time.

4. Method according to at least one of claims 1 to 3, wherein the step of comparing is continuously being carried out.

5. Method according to at least one of claims 1 to 4, further comprising the step of identifying a parameter pattern matching the at least one technical parameter (P); wherein the notification event (N) notifies the user of the identification.

6. Method according to at least one of claims 1 to 5, further comprising the step of identifying a specification group (G) containing a number of specification datasets (Q).

7. Method according to at least one of claims 1 to 6, wherein the at least one specification dataset (Q) is derived from and/or associated with a guideline, standard, and/or set of regulations pertaining to the apparatus (A).

8. Method according to at least one of claims 1 to 7, wherein the at least one specification dataset (Q) is derived from and/or associated with at least one experience dataset (E) comprising at least one experientially assessed parameter (F) associated with the at least one technical parameter (P).

9. Method according to at least one of claims 1 to 8, further comprising the step of accessing at least one technical documentation database (12) for obtaining the at least one specification dataset (Q).

10. Method according to at least one of claims 1 to 9, wherein a machine learning module (11) identifies the at least one technical parameter (P) and/or the at least one parameter specification (R).

11. Method according to at least one of claims 1 to 10, further comprising the step of restricting a dissipation of the at least one technical parameter (P) and/or the at least one parameter specification (R) to the computer workstation (5) and/or a computer system (1).

12. A computer program (3) comprising instructions which, when the program is executed by a computing device (2), cause the computing device (2) to carry out a method according to at least one of claims 1 to 11.

13. A computer-readable data-carrier (4, 4a, 4b) having stored thereon the computer program (3) of claim 12.

14. A computing device (2), in particular a computer workstation (5), configured to carry out a computer program (3) according to claim 12 and/or comprising a computer-readable data-carrier (4, 4a, 4b) according to claim 13.

15. A computer system (1) comprising a computing device (2) according to claim 14 and/or a server device (6) configured to carry out a computer program (3) according to claim 12 and/or comprising a computer-readable data-carrier (4, 4a, 4b) according to claim 13.
